# EUROPÄISCHE PATENTSCHRIFT

(11) **EP 2 057 482 B1**
(45) Veröffentlichungstag und Bekanntmachung des Hinweises auf die Patenterteilung: **11.09.2013**
(21) Anmeldenummer: 07847472.3
(22) Anmeldetag: 28.11.2007
(51) Int. Cl.: G01T 1/17

(54) **ANORDNUNG UND VERFAHREN ZUR LADUNGSINTEGRATION**
SYSTEM AND METHOD FOR CHARGE INTEGRATION
SYSTÈME ET PROCÉDÉ POUR INTÉGRATION DE CHARGE

(30) Priorität: 11.12.2006 DE 102006058292
(43) Veröffentlichungstag der Anmeldung: 13.05.2009
(73) Patentinhaber: ams AG, 8141 Unterpremstätten (AT)
(72) Erfinder: FITZI, Andreas, 8712 Stäfa (CH)
(74) Vertreter: Epping - Hermann - Fischer
(86) Internationale Anmeldenummer: PCT/EP2007/062955
(87) Internationale Veröffentlichungsnummer: WO 2008/071549

(56) Entgegenhaltungen:
- EP-A- 1 011 193
- US-A- 5 488 415
- TIETZE, U., SCHENK, CH.: 'Halbleiter-Schaltungstechnik', Bd. 3, 1974, SPRINGER, BERLIN Seiten 139 - 141, XP008119745

## Beschreibung

Die Erfindung betrifft eine Anordnung und ein Verfahren zur Ladungsintegration sowie eine Verwendung der Anordnung.

Viele Sensoren in technischen Anwendungen erzeugen Ladungen, welche als Sensorsignal abgegeben werden. Dabei können beispielsweise Ströme auftreten, die relativ gering sind. Deswegen werden üblicherweise die Ladungen integriert und in Spannungen umgesetzt. Ein Beispiel für derartige Sensoren sind Fotodioden in einem Sensorfeld eines digitalen Röntgengeräts.

Um eine ausreichende Bildqualität für digitale Röntgenbilder zu erreichen, ist es wünschenswert, dass eine Schaltung, die zur Ladungsintegration verwendet wird, ein lineares Integrationsverhalten und geringes Rauschen aufweist. Ferner sollte eine derartige Schaltung für gewünschte Bildraten, Englisch: frame rates, geeignet sein und wenig Strom verbrauchen, um ein Aufheizen und eine damit verbundene Beeinflussung von temperaturabhängigen Komponenten zu vermeiden.

Für eine Integration werden vielfach kapazitive Elemente eingesetzt, die kleine Kapazitätswerte aufweisen, um höhere Spannungen zu erreichen. Zusätzlich werden Schalter verwendet, um den Integrationsvorgang zu steuern. Diese weisen oft parasitäre Kapazitäten auf, die beispielsweise aus Sperrschichtkapazitäten beim Einsatz von Halbleiterschaltern resultieren, welche sparinungsabhängig sind. Die parasitären Kapazitäten können hierbei die Genauigkeit der Integration beeinflussen. Zusätzlich kann der ladungsbereitstellende Sensor parasitäre Kapazitäten aufweisen, beispielsweise ebenfalls aufgrund eingesetzter Schalter oder in Form von Leitungskapazitäten, die in Abhängigkeit von Rauschen in der Schaltung das Integrationsergebnis verfälschen.

Bei herkömmlichen Schaltungen zur Integration wird beispielsweise versucht, die parasitären Kapazitäten durch Elemente mit gegensätzlichem Kapazitätsverhalten zu kompensieren. Da aber in der Regel keine Elemente mit vollständig gegensätzlichem Kapazitätsverhalten verfügbar sind, verbleiben dennoch Reste von Nicht-Linearitäten. Es ist auch schwierig, auftretende Nicht-Linearitäten durch digitale Nachbearbeitung zu kompensieren, da aufgrund von Prozessvariationen auch die jeweiligen parasitären Kapazitäten variieren.

Dokument EP 1011193 A1 befasst sich mit einem photoelektrischen Detektor. Eine Anordnung umfasst einen Photodetektor, der über eine Pufferstufe mit einem Operationsverstärker gekoppelt ist.

Dokument U. Tietze, Ch. Schenk, "Halbleiter-Schaltungstechnik", 1974, Springer Verlag, Seiten 139 bis 141, beschreibt einen Niederfrequenz-Vorverstärker mit zwei Transistoren.

Dokument US 5,488,415 beschreibt einen weiteren photoelektrischen Detektor. Bei dem Detektor wird die von einer Photodiode erzeugte Ladung über eine Kopplungsschaltung auf einen Kondensator übertragen.

Es ist Aufgabe der Erfindung, eine Anordnung und ein Verfahren zur Ladungsintegration anzugeben, mit denen eine Ladungsintegration mit verbesserter Linearität bei geringem Stromverbrauch durchgeführt werden kann. Es ist auch Aufgabe der Erfindung, eine Verwendung für die Anordnung anzugeben.

Diese Aufgaben werden mit den Gegenständen der unabhängigen Patentansprüche gelöst. Ausgestaltungsformen und Weiterbildungen der Erfindung sind Gegenstand der Unteransprüche.

Erfindungsgemäß umfasst eine Anordnung zur Ladungsintegration eine Ladungserzeugungsschaltung zur Abgabe eines ladungsabhängigen Signals. Ferner ist eine Kopplungsschaltung mit einem ersten und einem zweiten Transistor vorgesehen. Dabei ist der erste Transistor in Abhängigkeit des ladungsabhängigen Signals steuerbar. Der zweite Transistor ist ausgebildet, das ladungsabhängige Signal in Abhängigkeit einer Steuerung weiter zu leiten, die durch den ersten Transistor erfolgt. Eine Integration des weitergeleiteten ladungsabhängigen Signals wird durch einen Integrator ausgeführt.

Durch das Koppeln des Integrators über die Kopplungsschaltung mit der Ladungserzeugungsschaltung, die üblicherweise parasitäre Kapazitäten aufweist, wird der Einfluss der parasitären Kapazitäten auf ein Integrationsergebnis des Integrators verringert. Somit trägt auftretendes Rauschen in verringertem Maße zu Linearitätsabweichung bei der Integration bei.

In einer weiteren Ausführungsform der Erfindung weist der Integrator einen Differenzverstärker auf, der über einen kapazitiven Ladungsspeicher rückgekoppelt ist. Dabei kann der kapazitive Ladungsspeicher in Abhängigkeit eines Steuersignals entladbar sein. Der kapazitive Ladungsspeicher ist beispielsweise als Kondensator ausgeführt.

Dementsprechend kann eine Ladung beziehungsweise ein ladungsabhängiges Signal, welche von der Ladungserzeugungsschaltung abgegeben werden, über den kapazitiven Ladungsspeicher zu einer Spannung aufintegriert werden, welche von der erzeugten Ladungsmenge abhängt. Das Entladen kann beispielsweise über einen Schalter erfolgen, der parallel zu dem kapazitiven Ladungsspeicher geschaltet ist.

Erfindungsgemäß wird das ladungsabhängige Signal dem Integrator über eine Schalteinrichtung zugeführt, die in Abhängigkeit eines weiteren Steuersignals schaltbar ist. Dadurch kann die Ladungserzeugungsschaltung beziehungsweise die Kopplungsschaltung mit dem Integrator verbunden oder vom Integrator getrennt werden, um den Integrationsvorgang gezielt steuern zu können.

Die Ladungserzeugungsschaltung kann beispielsweise durch ein Sensorelement eines digitalen Röntgengeräts gebildet sein. Insofern kann die Ladungserzeugungsschaltung zumindest eine Fotodiode aufweisen.

Der erste und der zweite Transistor der Kopplungsschaltung können als Feldeffekttransistoren ausgeführt sein, beispielsweise als Sperrschichtfeldeffekttransistoren, JFET, oder als Feldeffekttransistoren mit isolierten Gate, IGFET. In verschiedenen Ausführungsformen können die Transistoren durch Metalloxid-Halbleiter-Feldeffekttransistoren, MOSFET, gebildet sein.

In einem Ausführungsbeispiel eines erfindungsgemäßen Verfahrens zur Ladungsintegration wird ein ladungsabhängiges Signal erzeugt. Ferner wird ein Steuersignal in Abhängigkeit des ladungsabhängigen Signals erzeugt. Das ladungsabhängige Signal wird in Abhängigkeit des Steuersignals weitergleitet und zu einem Ausgangssignal integriert.

In einer Ausführungsform des Verfahrens kann in einem ersten Zeitabschnitt ein kapazitiver Ladungsspeicher in Abhängigkeit eines weiteren Steuersignals entladen werden und in einen zweiten Zeitabschnitt das ladungsabhängige Signal in Abhängigkeit des weiteren Steuersignals weitergeleitet werden. Somit können definierte Randbedingungen für die Integration des ladungsabhängigen Signals erreicht werden.

Im Folgenden wird die Erfindung an mehreren Ausführungsbeispielen anhand der Figuren näher erläutert. Funktions- beziehungsweise wirkungsgleiche Elemente tragen dabei gleiche Bezugszeichen.

Es zeigen:
- Figur 1: eine beispielhafte Anordnung zur Ladungsintegration,
- Figur 2: ein erstes Ausführungsbeispiel einer Anordnung zur Ladungsintegration,
- Figur 3: ein zweites Ausführungsbeispiel einer Anordnung zur Ladungsintegration,
- Figur 4: ein Ausführungsbeispiel einer Transistorstromquelle,
- Figur 5A: ein Ausführungsbeispiel eines Transistorschalters,
- Figur 5B: ein beispielhaftes Ersatzschaltbild für den Transistorschalter aus Figur 5A,
- Figur 6: ein beispielhaftes Ersatzschaltbild für einen weiteren Transistorschalter und
- Figur 7: ein Ausführungsbeispiel einer Ladungserzeugungsschaltung.

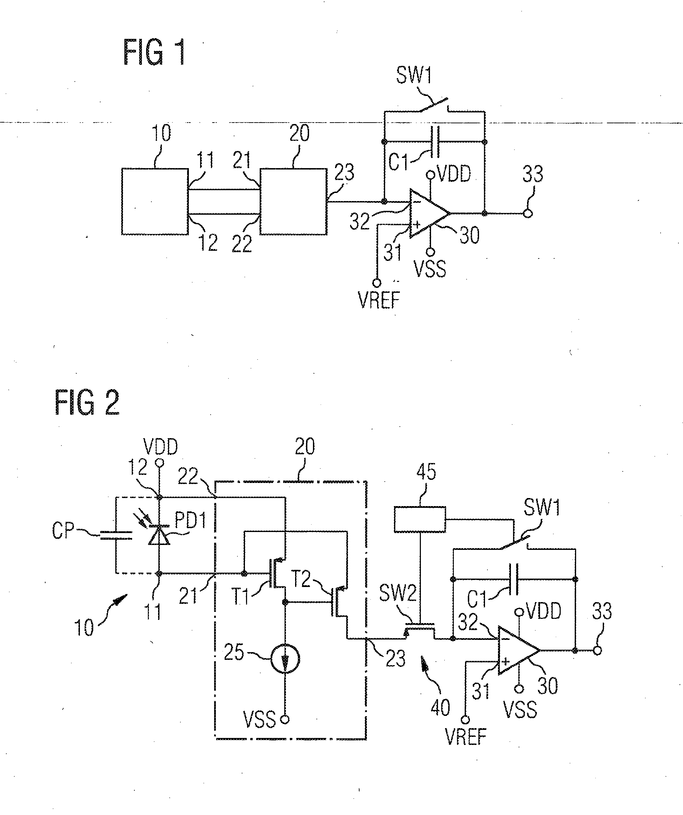

Figur 1 zeigt ein Beispiel einer Anordnung zur Ladungsintegration, die eine Ladungserzeugungsschaltung 10, eine Kopplungsschaltung 20 und einen Differenzverstärker 30 umfasst. Die Ladungserzeugungsschaltung 10 weist einen ersten und einen zweiten Signalanschluss 11, 12 auf, die mit einem ersten und einem zweiten Eingang 21, 22 der Kopplungsschaltung 20 gekoppelt sind. Der Differenzverstärker 30, der zur Versorgung an einen Versorgungspotenzialanschluss VDD und einen Bezugspotenzialanschluss VSS angeschlossen ist, weist einen ersten, nicht invertierenden Eingang 31 auf, der mit einem Referenzpotenzialanschluss VREF gekoppelt ist. Ein zweiter, invertierender Eingang 32 des Differenzverstärkers 30 ist mit einem Ausgang 23 der Kopplungsschaltung 20, gekoppelt. Des Weiteren ist ein Ausgang 33 des Differenzverstärkers 30 über einen kapazitiven Ladungsspeicher C1 und einen dazu parallel geschalteten Schalter SW1 an den invertierenden Eingang 32 angeschlossen. Der kapazitive Ladungsspeicher C1 ist beispielsweise als Kondensator ausgeführt. Eine Spannung am Referenzpotenzialanschluss VREF kann etwa durch ein Massepotenzial gegeben sein.

Im Betrieb der Anordnung werden von der Ladungserzeugungsschaltung 10 Ladungsträger erzeugt und in Form eines ladungsabhängigen Signals an die Kopplungsschaltung 20 zugeführt. Beim Auftreten entsprechender Ladungen werden in der Kopplungsschaltung 20 hier nicht gezeigte Transistoren derart aufgesteuert, dass schließlich das ladungsabhängige Signal an den Differenzverstärker 30, der einen Integrator bildet, weitergeleitet wird. Dabei ist während einer Integration in einem ersten Zeitabschnitt der Schalter SW1 in einem geöffneten, nicht leitenden Zustand. Durch das ladungsabhängige Signal wird das Potenzial am Eingang 32 des Integrators 30 beeinflusst, wodurch der Ladungsspeicher C1 auf eine Spannung aufgeladen wird, die abhängig von einer Menge der erzeugten Ladungsträger ist. Eine entsprechende Spannung kann am Ausgang 33 des Integrators 30 zur Weiterverarbeitung abgegriffen werden.

Durch Schließen des Schalters SW1 erfolgt in einem zweiten Zeitabschnitt ein Potenzialausgleich am Ladungsspeicher C1, so dass dieser für, einen nächsten Integrationsvorgang einen definierten Ausgangszustand aufweist.

Figur 2 zeigt ein erstes Ausführungsbeispiel einer Anordnun zur Ladungsintegration. Dabei weist die Ladungserzeugungsschaltung 10 eine Photodiode PD1 sowie ein kapazitives Element CP auf. Das kapazitive Element CP ist dabei nicht durch ein spezielles Bauelement realisiert, sondern stellt vielmehr einen symbolischen Ersatz für parasitäre Kapazitäten dar, welche in der Ladungserzeugungsschaltung 10 wirken. Beispielsweise umfasst das kapazitive Element CP Leitungskapazitäten oder auch Kapazitäten von hier nicht gezeigten Schaltern, über die die Photodiode PD1 an die Anschlüsse 11, 12 geschaltet ist.

Die Photodiode PD1 ist kathodenseitig an den Versorgungspotenzialanschluss VDD angeschlossen. Die Photodiode PD1 ist dazu eingerichtet, bei Beleuchtung einen Strom in Sperrrichtung der Diode abzugeben, das heißt in diesem Aüsführungsbeispiel vom Anschluss 11 zum Anschluss 21.

Die Kopplungsschaltung 20 umfasst einen ersten Transistor T1 und einen zweiten Transistor T2, die als p-Kanal Feldeffekttransistoren, beispielsweise als p-Kanal MOSFET ausgeführt sind. Dabei weist der erste Transistor T1 einen Steueranschluss oder Gate-Anschluss auf, der mit dem ersten Eingang 21 der Kopplungsschaltung 20 gekoppelt ist. Ein erster Anschluss oder Drain-Anschluss des ersten Transistors T1 ist an eine Stromquelle 25 angeschlossen, welche zudem mit einem Bezugspotenzialanschluss VSS gekoppelt ist. Ein zweiter Anschluss oder Source-Anschluss des ersten Transistors T1 ist mit dem zweiten Eingang 22 gekoppelt.

Ein Steueranschluss oder Gate-Anschluss des zweiten Transistors T2 ist an den Drain-Anschluss des ersten Transistors T1 gekoppelt. Des Weiteren sind ein erster Anschluss oder Drain-Anschluss des zweiten Transistors mit dem Ausgang 23 der Kopplungsschaltung und ein zweiter Anschluss oder Source-Anschluss des zweiten Transistors T2 mit dem Eingang 21 der Kopplungsschaltung 20 gekoppelt.

Die Anordnung zur Ladungsintegration umfasst ferner eine Schalteinrichtung 40, die den Ausgang 23 der Kopplungsschaltung 20 mit dem zweiten Eingang 32 des Differenzverstärkers 30 koppelt. Die Schalteinrichtung 40 ist dabei durch einen zweiten Schalter SW2 gebildet, der als Transistorschalter ausgeführt ist. Der zweite Schalter SW2 ist beispielsweise durch einen p-Kanal Feldeffekttransistor gebildet. Ferner ist eine Steuerschaltung 45 vorgesehen, die zur Steuerung des ersten und zweiten Schalters SW1; SW2 eingerichtet ist.

Wenn die Photodiode PD1 infolge einer Bestrahlung einen Strom am Anschluss 11 abgibt, steigt das Potenzial am Gate-Anschluss des ersten Transistors T1, wodurch dieser von einem leitenden in einen gesperrten Zustand gebracht wird. Dadurch sinkt wiederum das Potenzial am Drain-Anschluss des ersten Transistors beziehungsweise Gate-Anschluss des zweiten Transistors, so dass die gesteuerte Strecke des zweiten Transistors T2 in einen leitenden Zustand gelangt. Somit kann ein Stromfluss vom Ausgang 11 der Ladungserzeugungsschaltung 10 zum Ausgang 23 der Kopplungsschaltung 20 erfolgen.

Für eine Integration ist dabei in einem ersten Zeitabschnitt der erste Schalter SW1 geschlossen und der zweite Schalter SW2 geöffnet, um den kapazitiven Ladungsspeicher C1 zu entladen, wobei gleichzeitig ein Ladungsträgerfluss, das heißt Strom von der Kopplungsschaltung 20 in den Entladevorgang nicht ermöglicht wird.

In einem zweiten Zeitabschnitt ist der erste Schalter SW1 geöffnet und der zweite Schalter SW2 geschlossen, das heißt in einem leitenden Zustand. Somit wird das Ladungsabhängige Signal, das von der Photodiode PD1 erzeugt wird, durch die Kopplungsschaltung 20 und den zweiten Schalter SW2 an den Integrator 30 weiter geleitet, was, wie zur Figur 1 dargelegt, zur Aufladung des Ladungsspeichers C1 führt.

Wenn die Spannung am Anschluss 21 der Kopplungsschaltung 20 abfällt, gelangt der erste Transistor T1 wieder in einen leitenden Zustand, so dass die Spannung am Gate-Anschluss des zweiten Transistors T2 ansteigt und diesen in einen gesperrten Zustand versetzt. Somit wird ein Stromfluss zwischen der Ladungserzeugungsschaltung 10 und dem Integrator 30 verhindert.

Ohne die durch die Kopplungsschaltung 20 realisierte Trennung beziehungsweise Kopplung der Ladungserzeugungsschaltung 10 von beziehungsweise mit dem Integrator 30 könnte ein Rauschen in der Schaltung zu einer Generierung von Ladungen auf der parasitären Kapazität CP führen. Bei einem Integrationsvorgang würden die derart generierten Ladungen wie solche Ladungen erkannt und verarbeitet werden, die von der Photodiode PD1 erzeugt werden und somit das Integrationsergebnis verfälschen. Dem zufolge führt die Nutzung einer Kopplungsschaltung 20 zu einer Verbesserung des Rauschverhaltens der Anordnung.

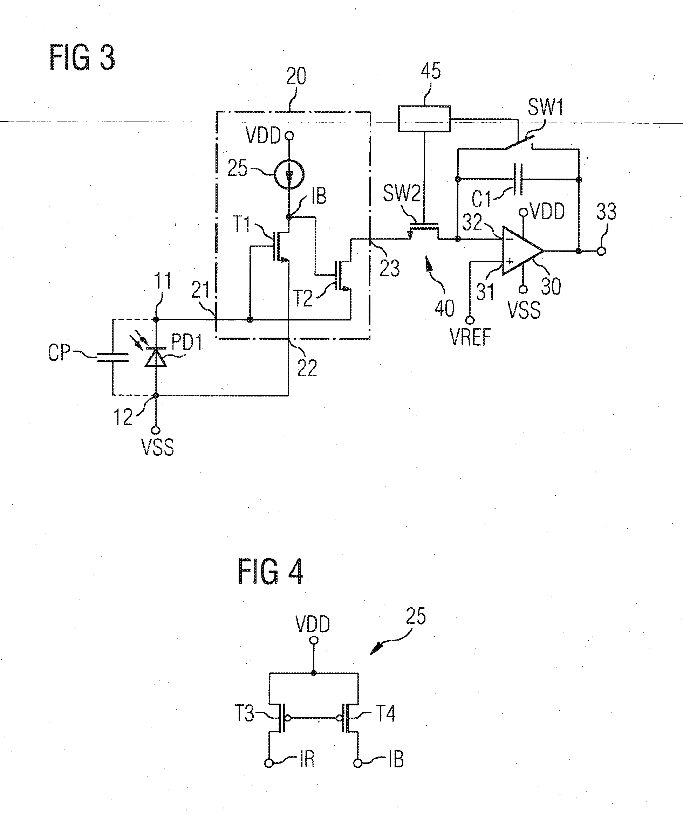

Figur 3 zeigt ein weiteres Ausführungsbeispiel einer Anordnung zur Ladungsintegration. Dabei ist die Photodiode PD1 anodenseitig mit dem Bezugspotenzial VSS gekoppelt. Im Gegensatz zu der vorherigen Ausführungsform fließt ein durch Bestrahlung der Photodiode PD1 hervorgerufener Strom vom Anschluss 21 der Kopplungsschaltung 20 zum ersten Anschluss 11 der Ladungserzeugungsschaltung 10. Der Schalter SW2 ist in diesem Ausführungsbeispiel als n-Kanal Feldeffekttransistor ausgeführt.

Die Kopplungsschaltung 20 umfasst einen ersten und einen zweiten n-Kanal Feldeffekttransistor T1, T2. Dabei sind ein Gate-Anschluss des ersten Transistors T1 und ein Source-Anschluss des zweiten Transistors T2 mit dem ersten Eingang 21 gekoppelt. Ein erster Anschluss oder Drain-Anschluss des ersten Transistors T1 ist an einen Stromausgang IB der Stromquelle 25 angeschlossen, die in diesem Ausführungsbeispiel mit dem Versorgungspotenzialanschluss VDD gekoppelt ist. Durch die Stromquelle 25 wird wiederum ein Arbeitspunkt des ersten Transistors T1 eingestellt. Ein zweiter Anschluss oder Source-Anschluss des ersten Transistors T1 ist an den zweiten Eingang 22 angeschlossen.

Der Steueranschluss oder Gate-Anschluss des zweiten Transistors T2 ist mit dem ersten Anschluss des ersten Transistors T1 gekoppelt. Die gesteuerte Strecke des zweiten Transistors T2 koppelt den ersten Eingang 21 mit dem Ausgang 23 der Koppelschaltung 20. Somit kann wiederum durch ein ladungsabhängiges Signal, das von der Ladungserzeugungsschaltung 10 generiert wird, mit dem ersten Transistor T1 ein Steuersignal erzeugt werden, mit dem der zweite Transistor T2 zur Kopplung der Ladungserzeugungsschaltung 10 mit dem Integrator 30 ansteuerbar ist.

Beispielsweise sinkt bei einem Strom durch die Photodiode PD1 ein Potenzial am Gate-Anschluss des ersten Transistors T1, wodurch dieser in einen sperrenden Zustand gelangt. Dies wiederum führt zu einem erhöhten Potenzial am Steueranschluss des zweiten Transistors T2 und einem Aufsteuern seiner gesteuerten Strecke. Somit kann das ladungsabhängige Signal über den zweiten Transistor T2 an den Integrator 30 zugeführt werden.

Ein Integrationsvörgang kann, wie im vorhergehenden Ausführungsbeispiel beschrieben, durch entsprechende Schalterstellungen des ersten und zweiten Schalters SW1, SW2 gesteuert werden.

Zusammengefasst gilt, dass mit dem Ausführungsbeispiel aus Figur 2 positive Ladungen integriert werden können, während durch das Ausführungsbeispiel in Figur 3 negative Ladungen integriert werden.

Figur 4 zeigt ein Ausführungsbeispiel einer Stromquelle 25, welche beispielsweise in dem Ausführungsbeispiel der Anordnung gemäß Figur 3 eingesetzt werden kann. Dabei umfasst die Stromquelle einen ersten und einen zweiten Transistor T3, T4, welche als Stromspiegel verschaltet sind. Beispielsweise kann über einen Referenzstromeingang IR ein Referenzstrom zugeführt werden, welcher vom Stromspiegeltransistor T4 über den Stromausgang IB abgegeben wird.

Durch die Stromquelle 25 kann ein Arbeitspunkt des ersten Transistors T1 in der Kopplungsschaltung 20 eingestellt werden. Dabei bestimmt ein Arbeitsstrom im Arbeitspunkt auch das Rauschen des Transistors T1. Beispielsweise sinkt bei einem erhöhten Arbeitsstrom das Rauschen in der Kopplungsschaltung 20, was jedoch auch mit einem erhöhten Stromverbrauch verbunden ist. Durch geeignete Wahl des Arbeitsstroms kann ein niedriges Rauschen bei gleichzeitig niedriger Stromaufnahme erreicht werden.

Für die in den Ausführungsbeispielen dargestellten Transistoren können sowohl Feldeffekttransistoren mit isolierten Gate als auch Sperrschicht-Feldeffektransistoren eingesetzt werden. Es ist jedoch auch möglich, Bipolar-Transistoren einzusetzen. Die Schalter SW1, SW2 können auch durch andere schaltende Elemente realisiert werden.

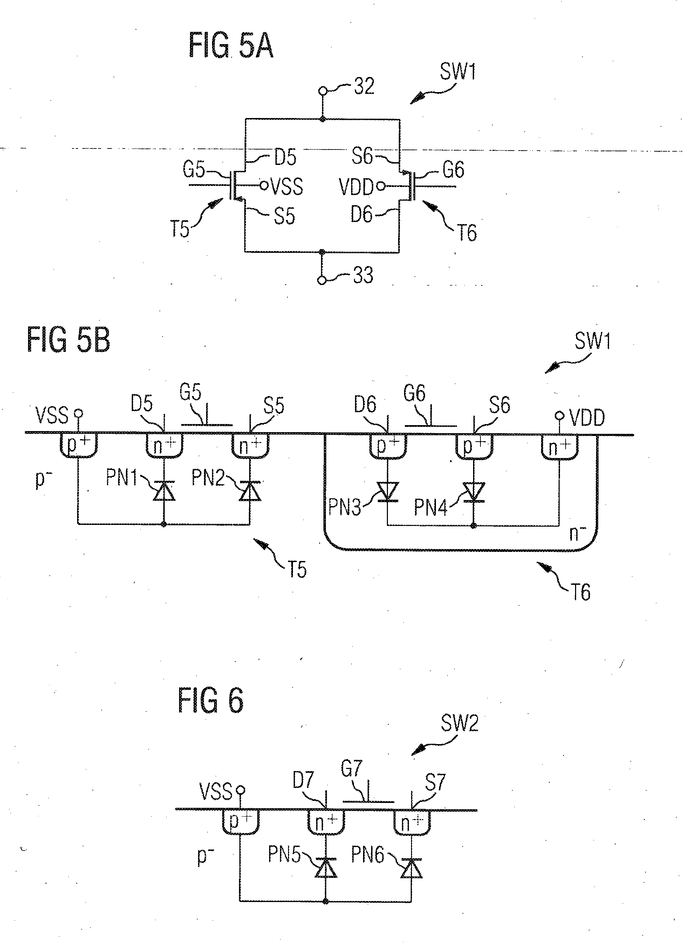

Figur 5A zeigt ein Ausführungsbeispiel eines als Transistorschalter ausgeführten Schalters SW1. Der Schalter SW1 umfasst dabei einen ersten und einen zweiten Transistor T5, T6, wobei der Transistor T5 beispielsweise als n-Kanal-Feldeffekttransistor und der Transistor T6 als p-Kanal-Feldeffekttransistor ausgeführt ist. In dem Schalter SW1 sind der Drain-Anschluss D5 des Transistors T5 und der Source-Anschluss S6 des Transistors T6 miteinander verbunden und an den Eingang 32 des Integrators 30 angeschlossen.

In ähnlicher Weise sind der Source-Anschluss S5 des Transistors T5 und der Drain-Anschluss D6 des Transistors T6 miteinander verbunden sowie an den Ausgang 33 des Integrators 30 angeschlossen. Ein Substrat-Anschluss des Transistors T5 ist mit dem Bezugspotenzialanschluss VSS gekoppelt. Dementsprechend ist der Substrat-Anschluss des Transistors T6 mit dem Versorgungspotenzialanschluss VDD gekoppelt. Über die Gate-Anschlüsse G5, G6 der Transistoren T5, T6 kann ein Steuersignal zum Schalten des Schalters SW1 zugeführt werden. Dabei umfasst das Steuersignal üblicherweise Steuerspannungen, mit denen beide Transistoren T5, T6 vollständig aufgesteuert oder vollständig zugesteuert werden können.

Figur 5B zeigt ein beispielhaftes Ersatzschaltbild für den in Figur 5A dargestellten Transistorschalter SW1. Die mit p+, n+, p-, n- gekennzeichneten Bereiche stellen entsprechend p- beziehungsweise n-dotierte Bereiche dar, die bei Integration_ in einem Halbleiterkörper auftreten. Dabei resultieren zwischen dem Drain- beziehungsweise dem Source-Anschluss D5, S5 und dem mit dem Bezugspotenzialanschluss VSS gekoppelten Substratanschluss des Transistors T5 jeweilige pn-Übergänge PN1, PN2, die jeweils eine Sperrschichtkapazität aufweisen.

In analoger Weise sind die pn-Übergänge PN3, PN4 zwischen Drain- beziehungsweise Source-Anschluss D6, S6 und Substratanschluss des Transistors T6 gebildet. Ein Wert der jeweiligen Sperrschichtkapazitäten an den pn-Übergängen PN1 bis PN4 hängt von einer Spannung zwischen den Substratanschlüssen und den Source- beziehungsweise Drain-Anschlüssen der Transistoren T5, T6 ab. Spannungsschwankungen beziehungsweise Spannungsveränderungen und daraus resultierende Kapazitätsänderungen an den pn-Übergängen PN1, PN4 sind durch den Einsatz des Differenzverstärkers 30 verringert, so dass diese die Genauigkeit des integrierten Ausgangssignals am Ausgang 33 nur geringfügig beeinflussen. Die pn-Übergänge PN2, PN3, die an den Ausgang 33 des Differenzverstärkers 30 angeschlossen sind, werden direkt von diesem versorgt, so dass ihr Einfluss vernachlässigbar ist.

Figur 6 zeigt ein beispielhaftes Ersatzschaltbild für den zweiten Transistorschalter SW2. Eine geschaltete beziehungsweise gesteuerte Strecke des Schalters SW2 ist beispielsweise zwischen dem Drain-Anschluss D7 und dem Source-Anschluss S7 gegeben. Eine Steuerung erfolgt über eine Steuerspannung am Gate-Anschluss G7. In ähnlicher Weise wie beim Transistorschalter SW1 sind zwischen dem Drain-Anschluss D7 beziehungsweise dem Source-Anschluss S7 und dem mit dem Bezugspotenzialanschluss VSS gekoppelten Substratanschluss pn-Übergänge, PN5, PN6 gebildet. Auch die dort auftretenden Sperrschichtkapazitäten, deren Wert von den anliegenden Spannungen abhängt, können grundsätzlich das Integrationsverhalten_beeinflussen. Jedoch ist eine Spannungsvariation wie beim Transistorschalter SW1 durch das Übertragungsverhalten beziehungsweise die Verstärkung des Differenzverstärkers 30 reduziert.

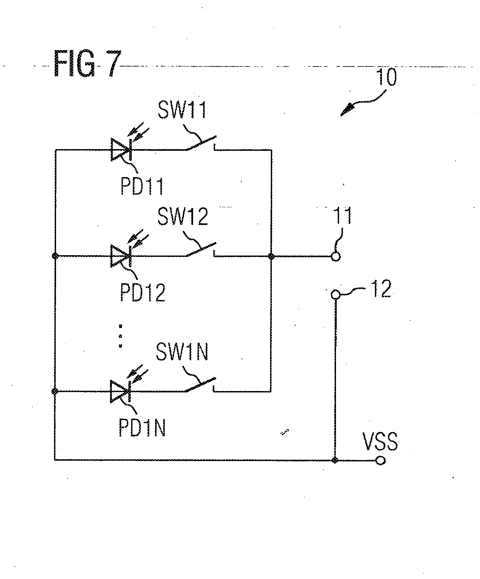

Figur 7 zeigt ein Ausführungsbeispiel einer Ladungserzeugungsschaltung 10. Dabei umfasst die Ladungserzeugungsschaltung 10 mehrere Photodioden PD11, PD12, PD1N, die jeweils in Reihe mit einem entsprechenden Schalter SW11, SW12, SW1N geschaltet sind. Die Anodenanschlüsse der Photodioden PD11, PD12, PD1N sind miteinander gekoppelt sowie an den Bezugspotenzialanschluss VSS und den Anschluss 12 angeschlossen. Kathodenseitig sind die Photodioden PD11, PD12, PD1N über die Schalter SW11, SW12, SW1N mit dem Anschluss 11 gekoppelt.

Beispielsweise stellen die Photodioden PD11, PD12, PD1N eine physikalische Zeile von Photodioden in einem Sensorfeld eines digitalen Röntgengeräts dar. Im Betrieb des Geräts können die Photodioden PD11, PD12, PD1N beispielsweise nacheinander durch entsprechende Steuerung der Schalter SW11, SW12, SW1N zwischen die Anschlüsse 11, 12 geschaltet werden, so dass jeweils nur eine Photodiode ein jeweiliges ladungsabhängiges Signal erzeugt. In einem digitalen Röntgengerät können zum Beispiel mehrere Anordnungen nach einem der beschriebenen Ausführungsbeispiele eingesetzt werden, wobei jeweils eine Zeile mit Photodioden in einem zweidimensionalen Sensorfeld verarbeitet wird.

Durch die notwendigen Leitungen und die Schalter SW11, SW12, SW1N können parasitäre Kapazitäten auftreten, die in den Figuren 2 und 3 beispielsweise durch die parasitäre Kapazität CP dargestellt sind. Durch die Kopplungsschaltung 20 ist jedoch der Einfluss der parasitären Kapazitäten auf den Integrationsvorgang verringert.

Durch die erhöhte Linearität der Anordnung zur Ladungsintegration ist diese sowohl zur Integration von großen als auch kleinen Ladungsmengen geeignet. Weil hierzu für den kapazitiven Ladungsspeicher C1 auch kleine Kapazitätswerte gewählt werden können, verringert sich eine Zeitkonstante der Integration. Somit sind eine schnellere Integration und höhere Bildraten bei einem digitalen Röntgengerät möglich.

Ein Rauschen des Differenzverstärkers beziehungsweise der gesamten Anordnung kann durch Zuführung eines höheren Arbeitspunkt-Stroms reduziert werden. Weil aber das Rauschen einen verringerten Einfluss auf eine Aufladung der parasitären Kapazitäten, insbesondere in der Ladungserzeugungsschaltung 10 hat, kann der Differenzverstärker mit einem geringeren Stromverbrauch betrieben werden. Die Anordnung zeichnet sich somit durch eine geringe Leistungsaufnahme aus.

Eine Anordnung zur Ladungsintegration gemäß einem der vorgeschlagenen Ausführungsbeispiele kann beispielsweise in einem digitalen Röntgengerät verwendet werden. In anderen Ausführungsformen kann die Ladungserzeugungsschaltung 10 auch andere ladungserzeugende Elemente umfassen, wie beispielsweise piezoelektrische Sensoren. Eine Anordnung kann in integrierter Form auf einem Halbleiterkörper hergestellt werden.

### Bezugszeichenliste

- 10: Ladungserzeugungsschaltung
- 11, 12: Anschlüsse
- 20: Kopplungsschaltung
- 21, 22, 23: Anschlüsse Kopplungsschaltung
- 30: Differenzverstärker
- 31, 32: Verstärkereingang
- 33: Verstärkerausgang
- 25: Stromquelle
- 40: Schalteinrichtung
- 45: Steuereinrichtung
- SW1, SW2: Schalter
- SW11, SW12, SW1N: Schalter
- C1: Ladungsspeicher
- CP: parasitäre Kapazität
- VDD: Versorgungspotenzialanschluss
- VSS: Bezugspotenzialanschluss
- VREF: Referenzpotenzialänschluss
- PD1, PD11, PD12, PD1N: Photodiode
- T1 bis T6: Transistor
- PN1 bis P6: PN-Übergang
- IR: Referenzsstromanschluss
- IB: Stromausgang

## Patentansprüche

1. Anordnung zur Ladungsintegration, umfassend
- eine Ladungserzeugungsschaltung (10) zur Abgabe eines ladungsabhängigen Signals;
- eine Kopplungsschaltung (20) mit einem ersten und einem zweiten Transistor (T1, T2), bei der der erste Transistor (T1) in Abhängigkeit des ladungsabhängigen Signals steuerbar ist und der zweite Transistor (T2) ausgebildet ist, das ladungsabhängige Signal in Abhängigkeit einer Steuerung weiterzuleiten, die durch den ersten Transistor (T1) erfolgt; und
- einen Integrator (30), der zur Integration des weitergeleiteten ladungsabhängigen Signals ausgeführt ist;
**dadurch gekennzeichnet, dass**
das von der Ladungserzeugungsschaltung (10) abgegebene ladungsabhängige Signal dem Integrator (30) über die Kopplungsschaltung (20) und eine Schalteinrichtung (40), die in Abhängigkeit eines weiteren Steuersignals schaltbar ist, zugeführt wird, um einen kapazitiven Ladungsspeicher (C1) des Integrators (30) aufzuladen.

2. Anordnung nach Anspruch 1,
bei der der Integrator (30) einen Differenzverstärker aufweist, der über den kapazitiven Ladungsspeicher (C1) rückgekoppelt ist.

3. Anordnung nach Anspruch 2,
bei der der kapazitive Ladungsspeicher (C1) in Abhängigkeit eines Steuersignals entladbar ist.

4. Anordnung nach einem der Ansprüche 1 bis 3,
bei der die Ladungserzeugungsschaltung (10) zumindest eine Photodiode (PD1, PD11, PD12, PD1N) aufweist.

5. Anordnung nach einem der Ansprüche 1 bis 4,
bei der der erste und der zweite Transistor (T1, T2) als Feldeffekttransistoren ausgeführt sind.

6. Verfahren zur Ladungsintegration, umfassend die Schritte:
- Erzeugen eines ladungsabhängigen Signals;
- Erzeugen, in einer Kopplungsschaltung (20), eines Steuersignals in Abhängigkeit des ladungsabhängigen Signals;
- Weiterleiten des ladungsabhängigen Signals durch die Kopplungsschaltung (20) in Abhängigkeit des Steuersignals;
- Übermitteln des weitergeleiteten ladungsabhängigen Signals durch eine Schalteinrichtung (40), die in Abhängigkeit eines weiteren Steuersignals schaltbar ist; und
- Integrieren des durch die Schalteinrichtung (40) übermittelten ladungsabhängigen Signals zu einem Ausgangssignal, wobei das ladungsabhängige Signal durch die Kopplungsschaltung (20) und die Schalteinrichtung (40) weitergeleitet wird, um einen kapazitiven Ladungsspeicher (C1) aufzuladen.

7. Verfahren nach Anspruch 6,
bei dem das Integrieren über einen Differenzverstärker (30) erfolgt, der über den kapazitiven Ladungsspeicher (C1) rückgekoppelt ist.

8. Verfahren nach Anspruch 7,
bei dem in einem ersten Zeitabschnitt der Ladungsspeicher (C1) in Abhängigkeit des weiteren Steuersignals entladen wird und in einem zweiten Zeitabschnitt das ladungsabhängige Signal in Abhängigkeit des weiteren Steuersignals weitergeleitet wird.

9. Verwendung einer Anordnung nach einem der Ansprüche 1 bis 5 in einem digitalen Röntgengerät.

## Claims

1. An arrangement for charge integration, comprising
- a charge generating circuit (10) to provide a charge-dependent signal;
- a coupling circuit (20) having first and second transistors (T1, T2) in which the first transistor (T1) can be controlled as a function of the charge-dependent signal, and the second transistor (T2) is configured to forward the charge-dependent signal as a function of a control scheme provided by the first transistor (T1); and
- an integrator (30) configured to integrate the charge-dependent signal that has been forwarded;
**characterized in that**
the charge-dependent signal output by the charge generating circuit (10) is supplied to the integrator (30) via the coupling circuit (20) and a switching unit (40), the latter being able to be switched as a function of a further control signal, to charge a capacitive charge storage device (C1) of the integrator (30).

2. The arrangement according to claim 1,
in which the integrator (30) comprises a differential amplifier that receives feedback through the capacitive charge storage device (C1).

3. The arrangement according to claim 2,
in which the capacitive charge storage device (C1) can be discharged as a function of a control signal.

4. The arrangement according to any of the claims 1 to 3,
in which the charge generating circuit (10) comprises at least one photodiode (PD1, PD11, PD12, PD1N).

5. The arrangement according to any of the claims 1 to 4,
in which the first and second transistors (T1, T2) are implemented as field-effect transistors.

6. A method of charge integration, comprising the steps for:
- generating a charge-dependent signal;
- generating, in a coupling circuit (20), a control signal as a function of the charge-dependent signal;
- forwarding the charge-dependent signal by the coupling circuit (20) as a function of the control signal;
- passing the forwarded charge-dependent signal by a switching unit (40) which can be switched as a function of a further control signal; and
- integrating the charge-dependent signal passed by the switching unit (40) to an output signal, the charge-dependent signal being forwarded by the coupling circuit (20) and the switching unit (40), to charge a capacitive charge storage device (C1).

7. The method according to claim 6,
in which the integration is carried out by means of an integrator (30) that receives feedback through the capacitive charge storage device (C1).

8. The method according to claim 7,
in which, during a first period of time, the charge storage device (C1) is discharged as a function of the further control signal, and, during a second period of time, the charge-dependent signal is forwarded as a function of the further control signal.

9. The use of an arrangement according to any of the claims 1 to 5 in a digital X-ray apparatus.

## Revendications

1. Dispositif d'intégration de charge, comprenant
- un circuit de production de charge (10) pour délivrer un signal dépendant de la charge;
- un circuit de couplage (20) présentant un premier et un deuxième transistor (T1, T2), le premier transistor (T1) pouvant être commandé en fonction du signal dépendant de la charge et le deuxième transistor (T2) étant constitué de sorte à transférer le signal dépendant de la charge en fonction d'une commande qui intervient par l'intermédiaire du premier transistor (T1); et
- un intégrateur (30) qui est exécuté pour intégrer le signal dépendant de la charge transféré;
**caractérisé en ce que**
le signal dépendant de la charge délivré par le circuit de production de charge (10) est amené à l'intégrateur (30) via le circuit de couplage (20) et un dispositif de commutation (40) qui est commutable en fonction d'un signal de commande supplémentaire, pour charger un accumulateur de charge capacitif (C1) de l'intégrateur (30).

2. Dispositif selon la revendication 1,
dans lequel l'intégrateur (30) présente un amplificateur différentiel qui est rétrocouplé via l'accumulateur de charge capacitif (C1).

3. Dispositif selon la revendication 2,
dans lequel l'accumulateur de charge capacitif (C1) est déchargeable en fonction d'un signal de commande.

4. Dispositif selon l'une des revendications 1 à 3,
dans lequel le circuit de production de charge (10) présente au moins une photodiode (PD1, PD11, PD12, PD1N).

5. Dispositif selon l'une des revendications 1 à 4,
dans lequel le premier et le deuxième transistor (T1, T2) sont exécutés comme transistors à effet de champ.

6. Procédé d'intégration de charge, comprenant les étapes de:
- production d'un signal dépendant de la charge;
- production, dans un circuit de couplage (20), d'un signal de commande en fonction du signal dépendant de la charge;
- transfert du signal dépendant de la charge via le circuit de couplage (20) en fonction du signal de commande;
- acheminement du signal dépendant de la charge transféré via un dispositif de commutation (40) qui est commutable en fonction d'un signal de commande supplémentaire; et
- intégration du signal dépendant de la charge acheminé via le dispositif de commutation (40) en un signal de sortie, le signal dépendant de la charge étant transféré via le circuit de couplage (20) et le dispositif de commutation (40) pour charger un accumulateur de charge capacitif (C1).

7. Procédé selon la revendication 6,
dans lequel l'intégration est effectuée via un amplificateur différentiel (30) qui est rétrocouplé via l'accumulateur de charge capacitif (C1).

8. Procédé selon la revendication 7,
dans lequel, dans un premier laps de temps, l'accumulateur de charge (C1) est déchargé en fonction du signal de commande supplémentaire et, dans un deuxième laps de temps, le signal dépendant de la charge est transféré en fonction du signal de commande supplémentaire.

9. Utilisation d'un dispositif selon l'une des revendications 1 à 5 dans un appareil de radiographie numérique.
